# EUROPEAN PATENT APPLICATION

(11) **EP 4 628 447 A1**
(43) Date of publication of application: **08.10.2025**
(21) Application number: 22967340.5
(22) Date of filing: 22.12.2022
(51) Int. Cl.: C01B 3/38, C01B 3/48

(54) **STEAM REFORMING SYSTEM WITH IMPROVED STARTING CHARACTERISTICS**

(30) Priority: 30.11.2022 KR 20220163927
(71) Applicant: Wonil T&i Co., Ltd., Gimpo-si, Gyeonggi-do 10047 (KR)
(72) Inventor: LEE, Jung Been, Seongnam-si, Gyeonggi-do 13589 (KR)
(74) Representative: Marks & Clerk LLP
(86) International application number: PCT/KR2022/021071
(87) International publication number: WO 2024/117365

(57) **Abstract**

Provided is a steam reforming system including: a heat exchange type-water gas shift reactor into which raw water is introduced to generate a first stream; a steam generator into which the first stream is introduced from the heat exchange type-water gas shift reactor to generate a second stream; a mixer into which a second stream is introduced from the steam generator and the raw gas is separately introduced to generate a mixed raw material; a superheater into which the mixed raw material is introduced from the mixer to generate a third stream; and a steam reforming reactor into which the third stream is introduced from the superheater to generate reformed gas, and further including an electric heater-type evaporator in front of the steam reforming reactor.

## Description

### [Technical Field]

The present disclosure relates to a steam reforming system with improved starting characteristics, and more particularly, to a steam reforming system which may be started quickly by smooth steam evaporation in a starting stage.

### [Background Art]

A steam reforming reactor may be a reactor that produces hydrogen from steam by using natural gas having methane as a main component as raw gas. The raw gas and the steam may be converted into reformed gas including hydrogen, carbon monoxide, and carbon dioxide mixed with each other by a catalyst. A process of conversion to the reformed gas may be performed by a strong endothermic reaction, i.e., by generally using a combustion device such as a burner or a catalyst combustor to supply separate reaction heat and heat a catalyst layer.

In the steam reforming system, an entire process may be performed by connecting a steam generator evaporating raw water required for the reaction with a reaction raw material preheater including the raw gas and the steam. Here, heat required for the steam generator and the preheater may be supplied by recovering waste heat from either combustion exhaust gas discharged or the reformed gas produced, by heating the catalyst layer.

A conventional steam reforming system may use a once-through boiler method in which only a single pipe is configured without a steam drum and the steam is generated as the raw water supplied by a feed pump sequentially passes through a preheating part, an evaporation part, and a superheating part when requiring quick starting, stopping, and load change response characteristics.

In the once-through boiler method, a pipe may be freely disposed, thus easily achieving a compact size of an entire device, and a very small retained water volume per heat transfer area. Therefore, a pressure and a retained water volume may be greatly changed based on a load change while time required to generate the steam to be consumed is short. Un-evaporated raw water and the steam may thus be introduced together into the steam reforming reactor at the starting and load change stages, which may cause a problem such as reduced process stability, damage to the catalyst, time delay for re-drying a moisture-soaked catalyst layer, or the like.

When output of the combustion device such as the burner or the catalyst combustor is continuously increased for the quick starting, the steam reforming catalyst layer, which directly exchanges heat with the combustion device, may be superheated to an appropriate temperature or more, thus causing heat damage to the catalyst. Therefore, there is a limit to the output of the combustion device during a starting operation.

Accordingly, there is a need for a steam reforming system that may solve the above problems while being started quickly by smooth steam evaporation at the starting stage of the steam reforming reactor.

### [Related Art Document]

### [Patent Document]

(Patent Document 1) Korean Patent No. 10-1098850 B1.

### [Disclosure]

### [Technical Problem]

An object of the present disclosure is to provide a steam reforming system which may be started quickly by smooth steam evaporation at a starting stage.

Another object of the present disclosure is to provide a steam reforming system which may stably perform a steam reforming process by preventing liquid raw water from being introduced into a steam reforming reactor at starting stage and load change stages and preventing a side reaction or damage to a catalyst.

Still another object of the present disclosure is to provide an electric heater-type evaporator which may have a greatly-shortened starting time by optimizing a thermal contact area to thus maximize its evaporation efficiency, and a steam reforming system including the same.

In addition, technical tasks of the present disclosure are not limited to those mentioned above, and other tasks not mentioned here may be obviously understood by those skilled in the art to which the present disclosure pertains from the following description.

### [Technical Solution]

In one general aspect, a steam reforming system includes: a heat exchange type-water gas shift reactorinto which raw water is introduced to generate a first stream; a steam generator into which the first stream is introduced from the heat exchange type-water gas shift reactor to generate a second stream; a mixer into which the second stream is introduced from the steam generator and raw gas is separately introduced to generate a mixed raw material; a superheater into which the mixed raw material is introduced from the mixer to generate a third stream; and a steam reforming reactor into which the third stream is introduced from the superheater to generate reformed gas, and further includes an electric heater-type evaporator formed in front of the steam reforming reactor.

The electric heater-type evaporator may be included between the steam generator and the mixer.

The second stream may be introduced from the steam generator into the electric heater-type evaporator to generate a 2-1-th stream, and the 2-1-th stream is introduced from the electric heater-type evaporator into the mixer.

The reformed gas generated in the steam reforming reactor may be cooled while sequentially passing through the steam generator and the water gas shift reactor, and the raw water may be steamed by exchanging heat with the reformed gas.

The electric heater-type evaporator may include a metal pipe extending in a length direction, and the metal pipe may include a supply port formed at the top or bottom, an outlet formed on one side, and at least one U-shaped heater pipe formed therein and parallel to the metal pipe in the length direction.

The electric heater-type evaporator may include a plurality of baffle plates formed in the metal pipe and extending in a thickness direction, and the plurality of baffle plates may be arranged to be spaced apart from each other.

The plurality of baffle plates may be sequentially and alternately arranged to be spaced apart from each other at the top and bottom of the metal pipe toward the outlet from the supply port of the metal pipe.

The plurality of baffle plates may be sequentially and alternately arranged to be spaced apart from each other at the bottom and top of the metal pipe toward the outlet from the supply port of the metal pipe.

A distance at which the plurality of baffle plates are spaced apart from each other may be 1/9L to 4/9L of a length L of the metal pipe.

The electric heater-type evaporator may include a porous heat transfer filler formed in the metal pipe.

The porous heat transfer filler may buffer the inside of the metal pipe.

The porous heat transfer filler may be disposed in a region away from the supply port of the metal pipe toward the outlet.

A distance at which the region in which the porous heat transfer filler is disposed is away from the supply port may be 1/9L to 3/9L of a length L of the metal pipe.

The electric heater-type evaporator may include a spray nozzle formed at an end of the supply port.

### [Advantageous Effects]

The steam reforming system according to the present disclosure may be started quickly by the smooth steam evaporation at the starting stage.

The steam reforming system according to an embodiment of the present disclosure may stably perform the steam reforming process by preventing the liquid raw water from being introduced into the steam reforming reactor at the starting and load change stages and preventing the side reaction or the damage to the catalyst.

The steam reforming system according to the present disclosure may stably perform the steam reforming process by preventing the liquid raw water from being introduced into the steam reforming reactor and preventing the side reaction or the damage to the catalyst.

The electric heater-type evaporator according to the present disclosure and the steam reforming system including the same may greatly shorten the starting time by maximizing the steam evaporation efficiency by optimizing the thermal contact efficiency.

### [Description of Drawings]

FIG. 1 is a view showing a configuration of a steam reforming system according to an embodiment of the present disclosure.
FIG. 2 is a view showing a configuration of a conventional steam reforming system.
FIG. 3 is a view showing a stream including raw water and raw gas together in the configuration of the steam reforming system according to an embodiment of the present disclosure.
FIGS. 4 and 5 are views each showing a cross-section of an electric heater-type evaporator in a length direction according to an embodiment of the present disclosure.
FIG. 6 is a view showing a cross-section of an electric heater-type evaporator including a spray nozzle according to an embodiment of the present disclosure.

### [Best Mode]

A term of a singular number used in the specification may be interpreted as including its plural number unless otherwise indicated.

A term 'to include' in the specification is a comprehensive description that has the meaning equivalent to an expression such as 'to include', 'to contain', 'to have' or 'to be featured', and does not exclude an element, a material, or a process that is not additionally enumerated.

A numerical range used in the specification may include the lower and upper limits and all values within the range, all values limited therein, and all possible combinations of the upper and lower limits in the numerical range defined in a different shape. The defined numerical range may also include values outside the numerical range, which may occur due to experimental errors or rounding of values unless otherwise specified in the specification.

A stream mentioned in the specification may include un-evaporated raw water and steam unless otherwise defined.

Unless otherwise defined, all technical and scientific terms may have the same meanings as those commonly understood by those skilled in the art to which the present disclosure pertains. Terms used in the description herein are provided only to effectively describe a specific embodiment, and are not intended to limit the present disclosure.

Hereinafter, a steam reforming system according to the present disclosure is described in more detail with reference to the drawings and the embodiment. However, the following embodiment or example described below is only a reference to explain the present disclosure in detail, the present disclosure is not limited thereto, and may be implemented in various forms.

A conventional steam reforming system may use a once-through boiler method in which only a single pipe is configured without a steam drum and the steam is generated as the raw water supplied by a feed pump sequentially passes through a preheating part, an evaporation part, and a superheating part when requiring quick starting, stopping, and load change response characteristics.

In the once-through boiler method, a pipe may be freely disposed, thus easily achieving a compact size of an entire device, and a very small retained water volume per heat transfer area. Therefore, a pressure and a retained water volume may be greatly changed based on a load change while time required to generate the steam to be consumed is short. The un-evaporated raw water and the steam may thus be introduced together into the steam reforming reactor at the starting and load change stages, which may cause a fatal problem such as reduced process stability, damage to a catalyst, delayed starting time for re-drying a moisture-soaked catalyst layer, or the like.

When output of a combustion device such as a burner or a catalyst combustor is continuously increased for the quick starting, a steam reforming catalyst layer, which directly exchanges heat with the combustion device, may be superheated to an appropriate temperature or more, thus causing heat damage to the catalyst. Therefore, there is a limit to the output of the combustion device during starting.

Accordingly, the present disclosure is directed to provide a steam reforming system which may have greatly-shortened starting time and simultaneously, solve the problems such as the reduced stability, the damage to the catalyst, or the delayed starting time.

According to an embodiment of the present disclosure, provided is the steam reforming system including: a heat exchange type-water gas shift reactor3 into which the raw water is introduced to generate a first stream; a steam generator 4 into which the first stream is introduced from the heat exchange type-water gas shift reactor3 to generate a second stream; a mixer 7 into which the second stream is introduced from the steam generator 4 and raw gas is separately introduced to generate a mixed raw material; a superheater 8 into which the mixed raw material is introduced from the mixer to generate a third stream; and a steam reforming reactor 10 into which the third stream is introduced from the superheater to generate reformed gas, and further including an electric heater-type evaporator 13 formed in front of the steam reforming reactor 10. The steam reforming system may further include the electric heater-type evaporator 13 formed in front of the steam reforming reactor 10 to thus induce additional evaporation even under a low heat input condition due to the load change, prevent the un-evaporated raw water from being introduced into the steam reforming reactor 10, and solve the problems such as damaging the catalyst or delaying the starting time. In addition, the steam reforming system may have the greatly-shortened starting time by including the electric heater-type evaporator 13 having a structure for maximizing a thermal contact area as described below.

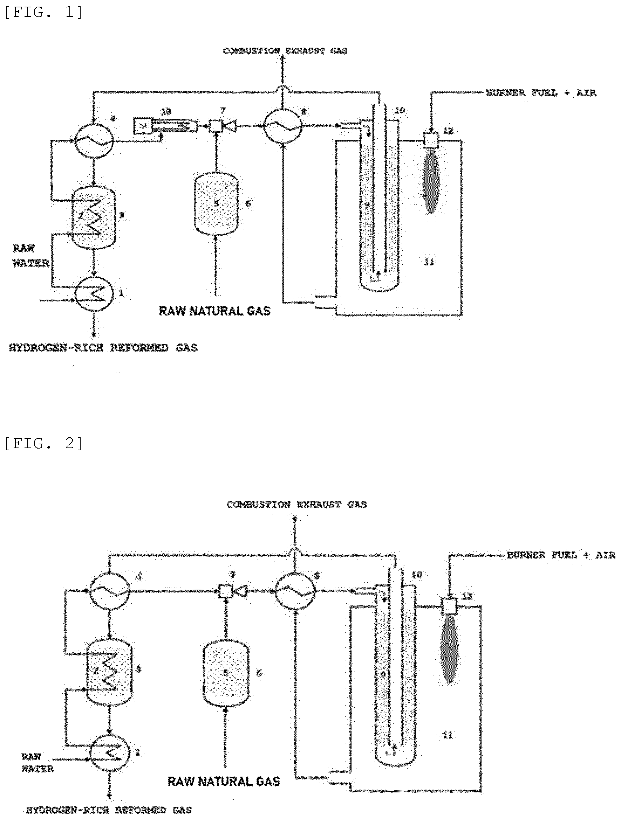

FIG. 2 is a view showing a configuration of a conventional steam reforming system. The conventional steam reforming system may include: a raw water preheater 1; a heat exchange type-water gas shift reactor3; a steam generator 4; a mixer 7; a superheater 8; and a steam reforming reactor 10. A heating furnace 11 may include the steam reforming reactor 10 and a burner 12, introduce a burner fuel and air into the burner 12, and gradually increase a temperature of the burner 12 based on the load change, thus supplying heat to the steam reforming reactor 10. The means for supplying heat may be used without limitation as long as the means is a means capable of supplying heat other than the burner 12. The steam reforming reactor 10 may include the steam reforming catalyst therein, and the raw gas and the steam may be introduced into the steam reforming reactor 10, thus generating the reformed gas including hydrogen by a reforming reaction.

Table 1 below shows a result of supplying the maximum amount of heat from the burner 12 as the conventional steam reforming system supplies the raw water and the raw gas up to 100% of the maximum load. In more detail, Table 1 below shows a stream (or a product) generated in a process in which the raw water is steamed.

**[Table 1]**

| Location | Product | Pressure (bar.G) | Temperature °C) | Steam fraction Vap.Fraction (kmol/hr) Vap.Fraction + Liquid Fraction (kmol/hr) |
|---|---|---|---|---|
| Outlet of raw water preheater 1 | Preheated raw water | 16 | 160 | 0 |
| Outlet of Heat exchange Type-water Gas shift reactor | First stream | 16 | 205 | 0.1 |
| Outlet of steam generator 4 | Second stream | 16 | 205 | 0.60 |
| Outlet of mixer 7 | Mixed raw material | 16 | 183 | 0.50 |
| Outlet of superheater 8 | Third stream | 15.5 | 196 | 1.0 |

Referring to Table 1 above, the preheated raw water discharged from the raw water preheater 1 may have not yet evaporated at a pressure of 16 bar.G and a temperature of 160°C, and only the raw water may exist. The preheated raw water may start to be evaporated while passing through the heat exchange type-water gas shift reactor 3 to allow the first stream discharged from the heat exchange type-water gas shift reactor 3 to have an increased steam fraction of 0.1, and allow the second stream discharged from the steam generator 4 to have an increased steam fraction of 0.6. The second stream discharged from the steam generator 4 may be mixed with the raw gas introduced separately into the mixer 7 to generate a mixed raw material, and allow the mixed raw material to have a temporarily-reduced steam fraction of 0.5 due to phase equilibrium. The mixed raw material discharged from the mixer 7 may be heated by the superheater 8, and a third stream discharged from the superheater may be completely steamed to have a steam fraction of 1. A reforming reaction may be performed by heating the completely-steamed stream to about 400 to 500°C and introducing the same into the steam reforming reactor 10.

However, during a starting operation of the conventional steam reforming system, evaporation processes in the heat exchange type-water gas shift reactor 3 and the steam generator 4 may all use only waste heat from the reformed gas. Therefore, a section may occur where an amount of heat required to evaporate the raw water is insufficient or not smoothly supplied, and its specific reasons are as follows. During the starting operation of the steam reforming system, the burner 12 may be gradually operated while first supplying inert gas such as nitrogen as purge gas instead of the raw gas to increase a temperature of a steam reforming catalyst layer 9 in the steam reforming reactor 10 and that of the heat exchange type-water gas shift reactor 3 to be approximate to an actual operation temperature, and first supply the feed pump with the raw water at a flow rate equivalent to a load of 50% or less, thus generating the steam by exchanging heat with the purge gas. The generated steam may sufficiently pass through the steam reforming catalyst layer 9 and the heat exchange type-water gas shift reactor 3, the raw gas may then be supplied at the flow rate equivalent to the load of 50% or less and converted into the reformed gas through reaction, and the steam may then be generated by exchanging heat between the generated reformed gas and the raw water. The purge gas may be stopped when achieving smooth steam generation, and the raw gas and the raw water may start to have a gradually-increased supply amount, thus being supplied up to 100% of the maximum load to thus complete the starting. Here, the heat exchange type-water gas shift reactor 3 or the steam generator 4 may have heat exchange efficiency changed based on the load change and the amount of heat supplied from the burner 12, and the heat exchange efficiency may be greatly reduced at the load of 50% or less as described above. Therefore, the raw water may not be smoothly evaporated, and the un-evaporated raw water may remain, thus causing various problems described above.

Accordingly, in an embodiment of the present disclosure, the electric heater-type evaporator 13 may be provided in front of the steam reforming reactor 10 to thus induce additional evaporation of the raw water even in the low heat input condition based on the load change, thereby shortening the starting time and preventing the un-evaporated raw water from being the introduced into the steam reforming reactor 10. In addition, the heat damage to the catalyst may be prevented by shortening the starting time without continuously increasing output of a combustion device such as a burner or a catalyst combustor.

In an embodiment, the electric heater-type evaporator 13 may be included between the steam generator 4 and the mixer. Referring to FIG. 1, the electric heater-type evaporator 13 may be provided in front of the mixer 7 mixing the second stream with the raw gas to prevent a side reaction or a risk, which is caused by flammable the raw gas, and may be installed behind the steam generator 4 to immediately supplement the insufficient amount of heat supplied from the heat exchange type-water gas shift reactor 3 and the steam generator 4 based on the load change, thereby effectively improving process efficiency and starting characteristics.

In an embodiment, the second stream may be introduced from the steam generator 4 into the electric heater-type evaporator 13 to generate a 2-1-th stream, and the 2-1-th stream may be introduced from the electric heater-type evaporator 13 into the mixer. The electric heater-type evaporator 13 may be provided between the steam generator 4 and the mixer to introduce the second stream from the steam generator 4 into the electric heater-type evaporator 13, thus causing the additional evaporation.

The electric heater-type evaporator 13 may have a heat capacity of 2% or more of a total heat input supplied from the burner 12. This capacity may be the minimum capacity for replacing the amount of heat that is insufficient in the heat exchange type-water gas shift reactor3 or the steam generator 4 during initial starting of the steam reforming system according to an embodiment of the present disclosure. In detail, the heat capacity of the electric heater-type evaporator 13 may be 4% or more of the total heat input supplied from the burner 12, 5% or more in more detail, and 20% or less without limitation.

In an embodiment, the reformed gas generated in the steam reforming reactor 10 may be cooled while sequentially passing through the steam generator 4 and the heat exchange type-water gas shift reactor 3, and the raw water may here be steamed by the heat exchange. As described above, the raw water may be gradually steamed by exchanging heat between waste heat from the reformed gas and the raw water. The raw water may be introduced into the raw water preheater 1 and preheated before being introduced into the heat exchange type-water gas shift reactor 3. The preheated raw water may be sequentially introduced into the heat exchange type-water gas shift reactor 3 and the steam generator 4, and the raw water may be gradually steamed by exchanging heat between waste heat from the reformed gas and the raw water. In addition to the heat exchange type-water gas shift reactor 3, the raw water preheater 1 and the steam generator 4 may all have heat exchange performance.

The electric heater-type evaporator 13 is described in detail as follows.

In an embodiment, the electric heater-type evaporator 13 may include a metal pipe extending in a length direction, and the metal pipe may include a supply port formed at the top or bottom, an outlet formed at one side, and at least one U-shaped heater pipe formed therein and parallel to the metal pipe in the length direction.

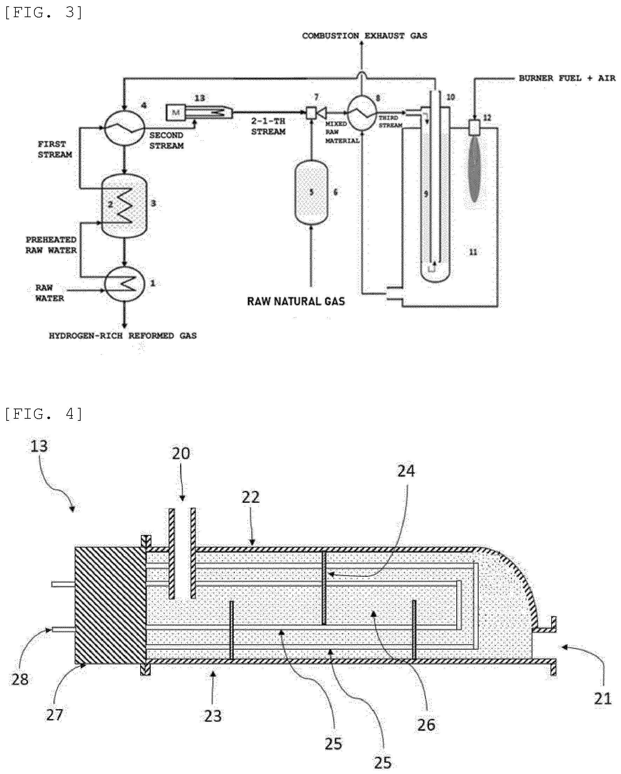

FIGS. 4 to 6 are views each showing a cross-section of the electric heater-type evaporator 13 in the length direction according to an embodiment of the present disclosure. The metal pipe may include a supply port 20 formed at the top 22 or the bottom 23, an outlet 21 formed on one side, and at least one U-shaped heater pipe 25 formed therein and parallel to the metal pipe in the length direction. The metal pipe may extend in the length direction, and in this case, a length L of the metal pipe may be 3H to 10H of a height H of the metal pipe. In detail, the length L may be 3H to 8H. This configuration is only an example, and is not necessarily limited thereto.

In an embodiment, the supply port 20 may be formed at the top 22 or bottom 23 of the metal pipe. FIG. 4 shows the electric heater-type evaporator 13 in which the supply port 20 is formed at the top 22 of the metal pipe. The second stream including the un-evaporated raw water and the steam may be introduced from the steam generator 4 into the metal pipe through the supply port 20, and the additional evaporation may be induced by at least one U-shaped heater pipe 25 included within the metal pipe and parallel to the metal pipe in the length direction.

In an embodiment, an end of the top 22 of the metal pipe in the length direction may be obliquely bent toward the bottom 23. In this way, the outlet 21 open between the top 22 obliquely bent toward the bottom 23 of the metal pipe and the bottom 23 may be formed at an end of one side of the metal pipe, thus efficiently discharging the product (or the 2-1-th stream). Here, the end of the top 22 of the metal pipe may be bent in a curved shape, and is not necessarily limited thereto. Meanwhile, no separate outlet 21 may exist other than the above outlet 21, and the product (or the 2-1-th stream) evaporated by the heater pipe 25 may thus be completely discharged from the outlet 21 and entirely introduced into the mixer 7.

In an embodiment, the electric heater-type evaporator 13 may include a plurality of baffle plates 24 formed in the metal pipe and extending in a thickness direction, and the plurality of baffle plates may be arranged to be spaced apart from each other. Referring to FIG. 4, when evaporating the second stream introduced into the supply port 20, the electric heater-type evaporator 13 may implement an excellent evaporation effect by including the plurality of baffle plates 24 extending in the thickness direction in the metal pipe to thus have an improved thermal contact area with the heater pipe 25. When the electric heater-type evaporator 13 does not include the baffle plate 24, the raw water introduced into the metal pipe may only come into contact with a portion of the heater pipe 25 disposed on the bottom 23 of the metal pipe, and the electric heater-type evaporator 13 may not induce efficient evaporation.

In an embodiment, the plurality of baffle plates may be sequentially and alternately arranged to be spaced apart from each other at the top and bottom of the metal pipe toward the outlet from the supply port of the metal pipe.

In an embodiment, the plurality of baffle plates may be sequentially and alternately arranged to be spaced apart from each other at the bottom and top of the metal pipe toward the outlet from the supply port of the metal pipe.

The plurality of baffle plates 24 may be alternately arranged to be spaced apart from each other. In this case, as described above, the baffle plates may be arranged in the order of the top 22, the bottom 23, and then the top 22 from the supply port of the metal pipe toward the outlet. Alternatively, as shown in FIG. 4, the baffle plates may be arranged in the order of the bottom 23, the top 22, and then the bottom 23 from the supply port of the metal pipe toward the outlet. In this case, the second stream introduced into the supply port may be induced by the plurality of baffle plates 24 as described above to come into contact with the entire heater pipe 25 and have the improved thermal contact area and contact time, thereby implementing the excellent evaporation effect and greatly shortening the starting time. Here, an angle at which each baffle plate 24 is disposed may preferably be perpendicular to the length direction of the metal pipe.

In an embodiment, a distance at which the plurality of baffle plates are spaced apart from each other may be 1/9L to 4/9L of the length L of the metal pipe. The thermal contact area may be maximized when the baffle plates are spaced apart from each other at the distance of 1/9L to 4/9L of the metal pipe length L, and the baffle plates may preferably be spaced apart from each other at the distance of 1/9L to 3/9L. The distance may be adjusted to optimize the number and arrangement structure of the baffle plates 24. The distance at which the plurality of baffle plates are spaced apart from each other may be 1/9L to 4/9L of the length L of the metal pipe, and is not necessarily limited thereto.

In an embodiment, the plurality of baffle plates 24 may be arranged to be spaced apart from the supply port at the distance of 1/9L to 4/9L. The baffle plates 24 may be arranged to be spaced apart from the supply port at the above distance, thus inducing smooth movement of the second stream including the un-evaporated raw water and the steam that are introduced into the supply port. The plurality of baffle plates 24 may be arranged to be spaced apart from the supply port at the distance of 1/9L to 4/9L, and are not necessarily limited thereto.

In an embodiment, each height of the plurality of baffle plates 24 may be 1/6H to 4/6H of the height H of the metal pipe. In this case, the thermal contact area may be maximized, and each height of the plurality of baffle plates 24 may be 1/6H to 3/6H in detail. The present disclosure is not necessarily limited thereto.

In an embodiment, the plurality of baffle plates 24 may all have the same height. The present disclosure is not necessarily limited thereto, and in another embodiment, the height of the plurality of baffle plates 24 may be gradually reduced from the supply port 20 toward the outlet 21. In this case, the smooth movement of the second stream including the un-evaporated raw water and the steam may be further induced.

In an embodiment, a material of the baffle plate 24 is not limited to as long as the baffle plate is not corroded by deformation or oxidation due to thermal expansion at a high temperature, and may be made of metal or ceramic.

In an embodiment, the electric heater-type evaporator 13 may include a porous heat transfer filler 26 formed in the metal pipe. By including the porous heat transfer filler 26, the electric heater-type evaporator 13 may further induce the smooth movement of the second stream introduced into the supply port and improve the thermal contact area. That is, the electric heater-type evaporator 13 may have maximum evaporation efficiency by including the porous heat transfer filler 26. The porous heat transfer filler 26 may include the conventionally known porous heat transfer filler 26, and include, for example, alumina, aluminum, iron, copper, graphene, carbon nanotubes, carbon black, graphite, carbon fiber, and one selected from the group consisting of a combination thereof. The porous heat transfer filler 26 may preferably be alumina.

In an embodiment, the porous heat transfer filler may buffer the inside of the metal pipe. The porous heat transfer filler 26 may fill and buffer the entire inside of the metal pipe as shown in FIG. 4 to induce the smooth movement of the second stream in all regions of the bottom and top of the metal pipe and improve the thermal contact area.

In an embodiment, the porous heat transfer filler may be disposed in a region away from the supply port of the metal pipe toward the outlet.

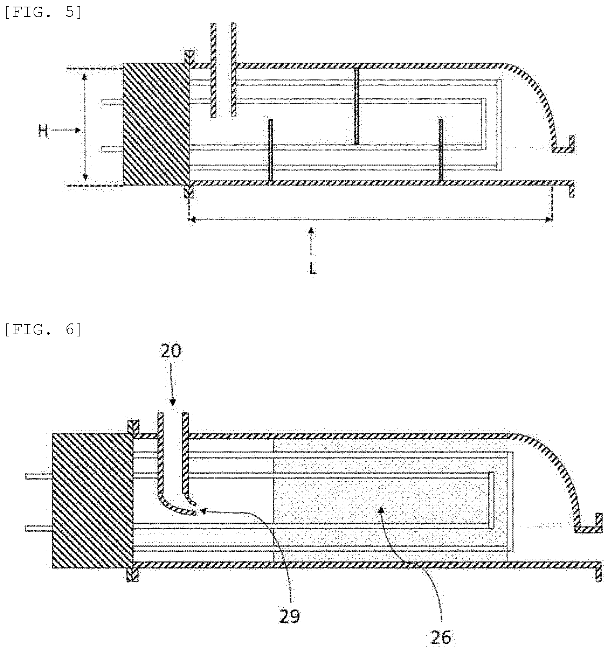

In an embodiment, a distance at which the region in which the porous heat transfer filler is disposed is away from the supply port may be 2/9L to 5/9L of the length L of the metal pipe. As described below, the electric heater-type evaporator 13 may include a spray nozzle formed at an end of the supply port. As shown in FIG 6, the porous heat transfer filler may be disposed in the certain region away from supply port 20. The porous heat transfer filler may induce a uniform evaporation effect by maximizing its initial contact area with the spray nozzle when the porous heat transfer filler is spaced apart from the supply port 20 at the above distance.

In an embodiment, the electric heater-type evaporator 13 may include a spray nozzle 29 formed at the end of the supply port 20. As shown in FIG. 6, the spray nozzle 29 formed at the end of the supply port 20 may be used to maximize the initial contact area and induce the uniform evaporation effect by spraying the raw water and the steam toward the porous heat transfer filler 26.

That is, the present disclosure may provide the steam reforming system including the electric heater-type evaporator 13 having a structure in which the thermal contact area is maximized as described above to thus induce smooth evaporation by greatly shortening the starting time and simultaneously supplementing and supplying the insufficient amount of heat required for evaporation of the raw water based on the load change, and prevent the un-evaporated raw water from being introduced into the steam reforming reactor 10.

Hereinafter, the description describes the steam reforming system according to an embodiment of the present disclosure in detail with reference to FIG. 1.

The steam reforming reactor 10 may include the catalyst layer 9 filled with the reforming catalyst. The reforming catalyst is not greatly limited to any specific type, and may include at least one metal selected from gold, silver, iron, cobalt, nickel, copper, manganese, aluminum, zinc, titanium, hafnium, platinum, rhodium, ruthenium, osmium, iridium, palladium, zirconium, and lanthanide metals, or at least one selected from the group consisting of oxides thereof and complexes thereof.

In the steam reforming reactor 10, the reforming reaction may involve a reaction as shown in Scheme 1 below:

[Scheme 1] CH₄ + H₂O → 3H₂.

Here, a reaction temperature may be 500 to 900°C or preferably be 600 to 850°C, and a reaction pressure may be 0.2 to 2.5 MPaG or preferably be 1.2 to 2.0 MPaG, which is only a non-limiting example, and the present disclosure is not limited to the above numerical ranges. The reforming reaction may be performed by the amount of heat supplied from the burner 12, and here, the amount of heat may be supplied while gradually increasing the temperature of the burner 12.

Combustion exhaust gas discharged from the steam reforming reactor 10 may evaporate and superheat the un-evaporated raw water by exchanging heat between waste heat from the combustion exhaust gas and the mixed raw material in the superheater 8 while passing through the superheater 8.

The reformed gas generated in the steam reforming reactor 10 may be cooled while sequentially passing through the steam generator 4 and the heat exchange type-water gas shift reactor 3, and in the heat exchange type-water gas shift reactor 3 filled with the water gas shift reaction catalyst 2, water gas shift reaction shown in Scheme 2 below may be accompanied to acquire the hydrogen-rich reformed gas:

[Scheme 2] CO + H₂O → CO₂ + H₂.

In an embodiment, the steam reforming system may further include the raw water preheater 1, and the raw water may be introduced into the raw water preheater 1 before being introduced into the heat exchange type-water gas shift reactor 3.

In an embodiment, the steam reforming system may further include a desulfurizer 6, and the raw gas may be introduced into the desulfurizer 6 before being introduced into the mixer 7. In order to acquire the high-quality reformed gas having a high hydrogen yield from the raw gas (e.g., natural gas or liquefied petroleum gas (LPG)), a desulfurization process may be performed by introducing the raw gas into the desulfurizer 6 filled with an adsorption-type desulfurizing agent 5 before introducing the raw gas into the mixer 7.

Although the embodiment of the present disclosure is described above with reference to the drawings, the present disclosure is not limited to the embodiment described above, and may be implemented in the various different forms. It is apparent to those skilled in the art to which the present disclosure pertains that the present disclosure may be embodied in another specific form without changing the spirit or essential feature of the present disclosure. Therefore, it is to be understood that the embodiment and examples described above are illustrative rather than restrictive in all aspects.

### [Description of symbols]

1: raw water preheater, 2: water gas shift reaction catalyst, 3: heat exchange type-water gas shift reactor, 4: steam generator, 5: adsorption-type desulfurizing agent, 6: desulfurizer, 7: mixer, 8: superheater, 9: steam reforming catalyst layer, 10: steam reforming reactor, 11: heating furnace, 12: burner, 13: electric heater-type evaporator, 20: supply port, 21: outlet, 22: top of metal pipe, 23: bottom of metal pipe, 24: baffle plate, 25: heater pipe, 26: porous heat transfer filler, 27: insulation part, 28: connection terminal, 29: spray nozzle, L: length of metal pipe, H: height of metal pipe

## Claims

1. A steam reforming system comprising:
a heat exchange type-water gas shift reactorinto which raw water is introduced to generate a first stream;
a steam generator into which the first stream is introduced from the heat exchange type-water gas shift reactor to generate a second stream;
a mixer into which the second stream is introduced from the steam generator and raw gas is separately introduced to generate a mixed raw material;
a superheater into which the mixed raw material is introduced from the mixer to generate a third stream; and
a steam reforming reactor into which the third stream is introduced from the superheater to generate reformed gas, and
further comprising an electric heater-type evaporator formed in front of the steam reforming reactor.

2. The system of claim 1, wherein the electric heater-type evaporator is included between the steam generator and the mixer.

3. The system of claim 2, wherein the second stream is introduced from the steam generator into the electric heater-type evaporator to generate a 2-1-th stream, and the 2-1-th stream is introduced from the electric heater-type evaporator into the mixer.

4. The system of claim 1, wherein the reformed gas generated in the steam reforming reactor is cooled while sequentially passing through the steam generator and the water gas shift reactor, and the raw water is steamed by exchanging heat with the reformed gas.

5. The system of claim 1, wherein the electric heater-type evaporator includes a metal pipe extending in a length direction, and
the metal pipe includes a supply port formed at the top or bottom, an outlet formed on one side, and at least one U-shaped heater pipe formed therein and parallel to the metal pipe in the length direction.

6. The system of claim 5, wherein the electric heater-type evaporator includes a plurality of baffle plates formed in the metal pipe and extending in a thickness direction, and
the plurality of baffle plates are arranged to be spaced apart from each other.

7. The system of claim 6, wherein the plurality of baffle plates are sequentially and alternately arranged to be spaced apart from each other at the top and bottom of the metal pipe toward the outlet from the supply port of the metal pipe.

8. The system of claim 6, wherein the plurality of baffle plates are sequentially and alternately arranged to be spaced apart from each other at the bottom and top of the metal pipe toward the outlet from the supply port of the metal pipe.

9. The system of claim 6, wherein a distance at which the plurality of baffle plates are spaced apart from each other is 1/9L to 4/9L of a length L of the metal pipe.

10. The system of claim 5, wherein the electric heater-type evaporator includes a porous heat transfer filler formed in the metal pipe.

11. The system of claim 5, wherein the porous heat transfer filler buffers the inside of the metal pipe.

12. The system of claim 5, wherein the porous heat transfer filler is disposed in a region away from the supply port of the metal pipe toward the outlet.

13. The system of claim 12, wherein a distance at which the region in which the porous heat transfer filler is disposed is away from the supply port is 2/9L to 5/9L of a length L of the metal pipe.

14. The system of claim 5, wherein the electric heater-type evaporator includes a spray nozzle formed at an end of the supply port.
